Europäisches Patentamt

(19) European Patent Office

Office européen des brevets

(11) Publication number : **0 310 572 B1**

# EUROPEAN PATENT SPECIFICATION

(45) Date of publication of patent specification :
22.05.91 Bulletin 91/21

(51) Int. Cl.⁵ : **B60N 2/04**

(21) Application number : 88830384.9

(22) Date of filing : 20.09.88

(54) Tip-up seat, particularly for motor vehicles.

(30) Priority : 30.09.87 IT 6782887

(43) Date of publication of application :
05.04.89 Bulletin 89/14

(45) Publication of the grant of the patent :
22.05.91 Bulletin 91/21

(84) Designated Contracting States :
DE ES FR GB SE

(56) References cited :
EP-A- 0 232 687
EP-A- 0 248 773
DE-A- 2 032 147
FR-A- 580 029
US-A- 3 037 735

(73) Proprietor : FIAT AUTO S.p.A.
Corso Giovanni Agnelli 200
I-10135 Torino (IT)

(72) Inventor : Dal Monte, Antonio
Piazza Apollodoro, 26
I-00196 Roma (IT)

(74) Representative : Bosotti, Luciano et al
c/o Jacobacci-Casetta & Perani S.p.A. Via
Alfieri, 17
I-10121 Torino (IT)

## Description

The present invention relates in general to automobile seats and particularly concerns a seat including at least one first arm for supporting the rear region of the seat on the floor of the passenger compartment, the first arm being pivotable about its lower end which is held in a position near the floor of the passenger compartment to allow the seat to be moved in a fore-and-aft direction relative to the passenger compartment.

A seat of this type is described, for example, in DE-A-2 032 147, as well as in European Patent Applications EP-A-0 232 687, EP-A-0 248 773 and EP-A-0 288 439, in the name of the same Applicant, the two latter documents being only within the meaning of Art. 54 (3) EPC.

The object of the present invention is to produce a seat which, taking the solutions described in the above-mentioned previous applications as a starting point, enables the following requirements to be satisfied in an optimal manner :

- maximum simplification of the structure of the seat and the system of movement (fore-and-aft adjustment and forward tipping),
- maximum freedom of movement for the lower limbs of the passengers seated on the rear bench seat when the seat is used as a front seat,
- the use, for the fore-and-aft adjustment, of a system of movement which operates along a path that achieves improved height adjustment for persons of different heights, and
- the achievement of the maximum possible forward tipping movement, so as to facilitate entry and exit of the occupants of the rear seat of the motor vehicle.

According to the present invention, this object is achieved by virtue of a seat of the above-specified type, characterised in that it includes at least one second arm which is hinged to the lower end of the first arm and is pivotable in its turn about a respective centre of rotation situated in a position generally higher than the position near the floor of the passenger compartment to enable a general upward movement of the lower end of the first arm from the position near the floor of the passenger compartment, with a consequent forward tipping of the seat.

The invention will now be described, purely by way of non-limiting example, with reference to the appended drawings, in which :

Figure 1 is a first side elevational view of a seat according to the invention,

Figure 2 shows a variant of the seat of Figure 1,

Figure 3 shows, with specific reference to the embodiment illustrated in Figure 2, the criteria, common also to the embodiment of Figure 1, according to which the seat according to the invention is tipped forwards, and

Figure 4 shows a possible further variant of the seat of Figure 2.

In the drawings, an automobile seat is generally indicated 1 and is intended preferably to be used as the front seat of a car.

Within the seat 1 there can generally be distinguished a horizontal sitting portion or squab 2 and a vertical portion or backrest 3 of which only the lower part is visible in the drawings.

An adjustment mechanism 4 of known type is interposed between the squab 2 and the backrest 3 and enables the position of the backrest 3 relative to the squab 2 to be varied selectively, particularly as far as its inclination is concerned.

The seat 1 is supported on the floor P of the passenger compartment of the vehicle (not illustrated in its entirety) astride a load-bearing structure, such as a rib or stiffening cross member T, which projects upwardly from the general plane of the floor P.

The seat 1 is supported on the floor P by an assembly of support elements which act in correspondence with the front end and the rear end of the squab 2.

In general, the terms "front", "rear", "lower" and "upper", as used in the present description and in the claims which follow, should be understood as referring to the normal position of mounting of the seat 1 in the motor vehicle.

As further background information, it should be noted that the elements supporting the seat 1 on the floor P are generally symmetrical on the two sides of the seat ; for this reason, explicit reference will only be made to the support elements on one side of the seat (specifically the left side) in the following detailed description, it being understood that, at least in the embodiments to which the present description relates, similar support elements are present on the other side of the seat.

In all the embodiments illustrated in the drawings, the rear end of the squab 2 is supported by an arm 5 having a lower end 6 pivotably hinged about a horizontal axis to a bracket 7 which, in the normal condition of use of the seat, rests on the floor P.

At its upper end, the arm 5 is connected to the seat 1 at an articulation point 8 usually defined by a pin which projects outwardly of the rear end of the squab 2.

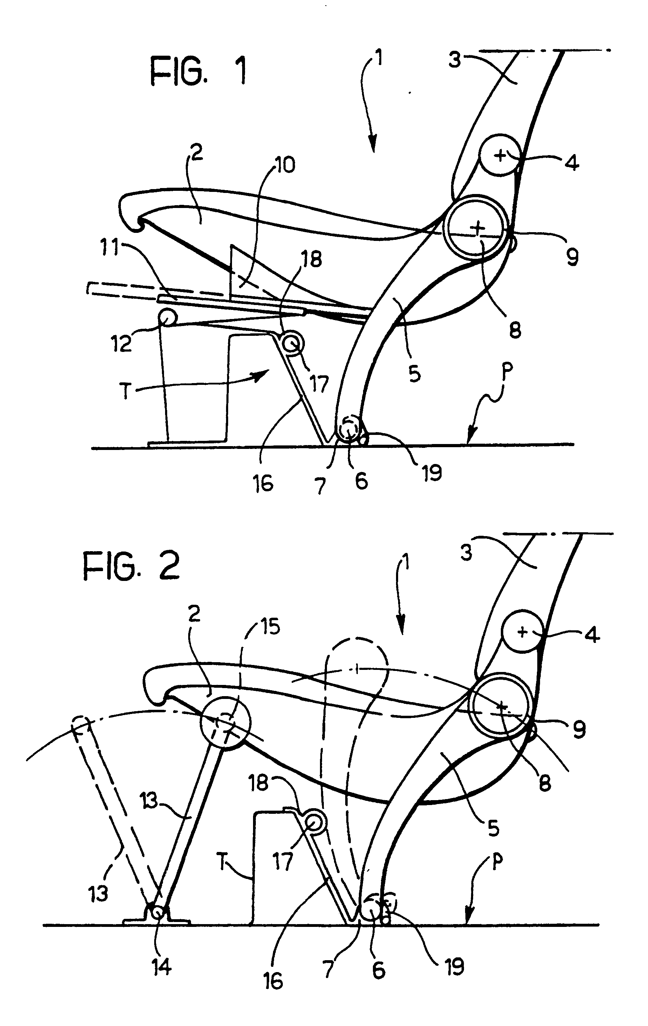

In the embodiments illustrated in Figures 1 and 2, the connection between the arm 5 and the squab 2 is achieved through an adjustment element 9 (of known and commercially available type) which enables the angle assumed by the arm 5 relative to the seat unit 1 to be varied selectively (for example, by the operation of an adjustment knob).

Since the arm 5 can pivot about its lower end 6 resting on the floor P, the above adjustability is translated into the possibility of selective variation of the longitudinal position assumed by the seat 1 relative to the passenger compartment. The user may thus adapt the seat to his own anthropometric characteristics and to his own driving and travelling habits.

According to a known solution, since the lower end 6 of the arm 5 is situated in a position generally forward of the rear region of the seat 1 (point 8), the upper end of the arm 5 causes the rear region to move along a circular path during pivoting of the arm 5, so that this rear region is raised or lowered respectively during forward and backward adjustment movements. In this way, it is possible to keep the line of sight of the person occupying the seat approximately constant, regardless of his stature.

In the embodiment illustrated in Figure 1, the squab 2 is supported at its front end by runners 10 which are slidable within respective guides 11 extending generally longitudinally of the passenger compartment. The guides 11 are mounted on the top of the cross member T by means of hinge elements with horizontal axes 12 which enable the guides 11 to be oriented so as to follow the runners 10 during their movement resulting from displacement of the seat 1 in a fore-and-aft direction relative to the passenger compartment. The movement of the runners 10 is in fact a combined translational and rotational movement due to the fact that the rear end of the squab 2, guided by the arm 5, describes, as can be seen, a circular path.

In the variant illustrated in Figure 2, the assembly constituted by the runners 10 and the guides 11 is replaced by a further pivoting arm 13 (one for each side of the seat) having a lower end 14 hinged to the floor P of the passenger compartment and an upper end 15 hinged to the squab at the front end thereof.

In Figures 1 and 2, the broken lines schematically indicate the position of maximum advance reached by the arm 5 and the plate 10 (Figure 1) or the arm 13 (Figure 2) during longitudinal adjustment of the seat from the most rearward position which is that shown by continuous lines in the same drawings.

The arm 5 is generally arcuate in shape with its concavity facing towards the rear of the passenger compartment : this solution, together with the positioning of the lower end 6 in an approximately central position relative to the length of the seat 1, means that the arm 5 gives maximum freedom of movement for the lower limbs of the passengers occupying the rear seat of the passenger compartment.

In both the solutions illustrated in Figures 1 and 2, the bracket 7 to which the arm 5 is hinged constitutes the lower end of a further arm 16 whose upper end 17 is itself hinged (for pivoting about a horizontal axis) to a support 18 fixed to the cross member T adjacent its top.

The pivoting arm 16 (here again, one for each side of the seat 1) is therefore able to pivot about a respective centre of rotation (hinge 17) which is in a position generally higher than and forward of the position occupied by the bracket 7 in the normal condition of use of the set described above.

A hook element 19 which can be operated by means of a lever or similar transmission element (not illustrated) locks – in its closed position – the arm 16 against the cross member T, keeping the bracket 7 in a position resting on the floor P of the passenger compartment.

In these conditions (which are those adopted when the vehicle is moving) it is possible to adjust the longitudinal position of the seat 1 selectively between the end positions shown by continuous lines and broken lines in Figures 1 and 2 by operating the device 9 which adjusts the angle of the arm 5 relative to the seat 1 as a whole.

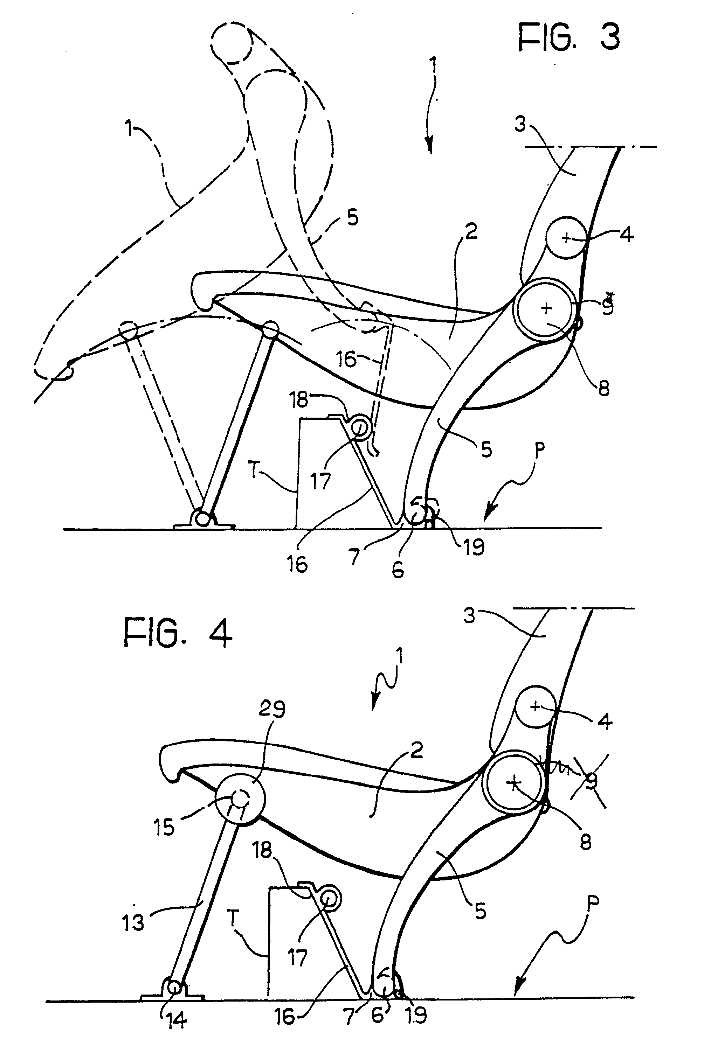

When the hook element 19 is brought into the disengaged position, however, the bracket 7 and the arm 16 as a whole are left free and the seat may be tipped forwards towards the forward position shown by chain lines in Figure 3.

Since the bracket 7 is no longer held by the hook element 19, the arm 16 is in fact free to pivot upwardly about the hinge 17, enabling the raising of its lower end (bracket 7) and the general forward translation of the arm 5 and the seat 1 as a whole.

In this way, the seat may be moved forwards into a position in which the greater part of its bulk is in fact positioned forward of the cross member T. Entry to and exit from the passenger compartment by the passengers occupying the rear seat is thus easy.

This result is obtained by virtue of the upward movement of the lower end 7 of the arm 16 from its position very near to the floor P, used in normal running conditions.

The seat 1 can then be moved back towards its normal position of use by tipping it backwards, causing a consequent downward pivoting of the arm 16 until the bracket 7 is brought into the position in which it is engaged by the element 19.

The variant illustrated in Figure 2 has a further advantage with respect to the solution illustrated in Figure 1 (runners 10 and guides 11), due to the fact that the seat may tipped forwards while the angle of the arm 5 relative to the squab 2 and the backrest 3 is kept constant : this means that the seat retains its adjustment position, preselected by operation of the device 9, whilst it is being tipped forwards.

The further variant illustrated in Figure 4 differs from the solution illustrated in Figure 2 in that the upper end 8 of the arm 5 is freely hinged to the rear region of the squab 2, while the longitudinal adjustment device (indicated 29 in Figure 4) is transferred to the upper end 15 of the front arm 13.

This solution can have advantages from the functional point of view, in that the knob for longitudinal adjustment of the seat is positioned near the front edge of the squab 2 in a position which is easily reached by the passenger, and, furthermore, is moved away from the other adjustment devices (knob 4) which enable the inclination of the backrest 3 to be adjusted.

## Claims

1. A vehicle seat comprising at least one first arm (5) for supporting the rear region of the seat (1) on the floor of the passenger compartment (P), the first arm being pivotable about its lower end (6) which is held in a position near the floor of the passenger compartment (Figure 1, Figure 2) to enable the seat (1) to be moved in a fore-and-aft direction relative to the passenger compartment, characterised in that it includes at least one second arm (16) hinged to the lower end (6) of the first arm (5) and pivotable in its turn about a respective centre of rotation (17) situated in a position generally higher than the position near the floor of the passenger compartment to enable a general upward movement of the lower end (6, 7) of the first arm (5) from the position near the floor of the passenger compartment (P), with a consequent forward tipping of the seat (1).

2. A seat according to Claim 1, which can be mounted on the floor of the passenger compartment (P) adjacent a load-bearing structure (T) projecting from the floor (P), characterised in that the respective centre of rotation (17) of the second arm is situated on the load-bearing structure (T).

3. A seat according to Claim 1 or Claim 2, characterised in that the respective centre of rotation is situated forward of the position near the floor of the passenger compartment (P).

4. A seat according to any one of Claims 1 to 3, characterised in that the first arm (5) extends along a curve with its concavity facing towards the rear part of the passenger compartment.

5. A seat according to any one of the preceding claims, characterised in that it includes hook means (19) acting between the floor of the passenger compartment (P) and the lower end (6) of the first arm (5) to prevent the general upward movement of the lower end (6) from its position near the floor of the passenger compartment (P).

6. A seat according to any one of the preceding claims, characterised in that it includes a first arm (5) and a second arm (16) for each side of the seat.

7. A seat according to Claim 1, characterised in that it includes, for supporting the front end of the seat (1), at least one guide (11) which has a generally horizontal development and defines the path of movement of the front end of the seat (1).

8. A seat according to Claim 7, characterised in that the at least one guide carries associated hinge means (12) which enable it to be oriented about a horizontal axis.

9. A seat according to Claim 2 and either of Claims 7 and 8, characterised in that the at least one guide (11) is mounted on the load-bearing structure (T).

10. A seat according to any one of the preceding Claims 1 to 6, characterised in that it includes at least one pivotable third arm (13) for supporting the front region of the seat (1) on the floor of the passenger compartment (P).

11. A seat according to any one of Claims 1 to 6, characterised in that the first arm (5) carries an associated adjustment device (9) for selectively varying the angle of the first arm (5) relative to the seat (1).

12. A seat according to Claim 10, characterised in that the third arm carries an associated adjustment device (29) for selectively varying the angle of the third arm (13) relative to the seat (1) while the first arm (5) is connected to the seat (1) and can pivot freely relative thereto.

## Ansprüche

1. Kraftfahrzeugsitz mit wenigstens einem ersten Arm (5) zum Abstützen des hinteren Bereichs des Sitzes (1) auf dem Boden (P) des Fahrgastraums, wobei dieser erste Arm um sein in einer Position in der Nähe des Fahrgastraumbodens gehaltenes (Fig. 1, Fig. 2) unteres Ende (6) verschwenkbar ist, um eine Bewegung des Sitzes (1) in Vorwärts-Rückwärtsrichtung relativ zu dem Fahrgastraum zu ermöglichen, dadurch gekennzeichnet, daß wenigstens ein zweiter Arm (16) vorgesehen ist, der mit dem unteren Ende (6) des ersten Arms (5) gelenkig verbunden ist und seinerseits um ein entsprechendes Rotationszentrum (17), das in einer Position liegt, die höher ist als die genannte Position in der Nähe des Fahrgastraumbodens, verschwenkbar ist, um eine allgemeine Aufwärtsbewegung des unteren Endes (6, 7) des ersten Arms (5) aus der Position in der Nähe des Fahrgastraumbodens (P) mit einem sich daraus ergebenden Vorwärtsklappen des Sitzes (1) zu ermöglichen.

2. Sitz nach Anspruch 1, der auf dem Fahrgastraumboden (P) im Bereich einer aus dem Boden (P) hervorstehenden tragenden Konstruktion (T) montierbar ist, dadurch gekennzeichnet, daß das Rotationszentrum (17) des zweiten Arms an der tragenden Konstruktion (T) angeordnet ist.

3. Sitz nach Anspruch 1 oder 2, dadurch gekennzeichnet, daß das jeweilige Rotationszentrum vor der genannten Position in der Nähe des Fahrgastraumbodens (P) liegt.

4. Sitz nach einem der Ansprüche 1 bis 3, dadurch gekennzeichnet, daß der erste Arm (5) gekrümmt ist, und daß seine Hohlseite dem hinteren Teil des Fahrgastraum zugewandt ist.

5. Sitz nach einem der vorhergehenden Ansprüche, dadurch gekennzeichnet, daß Verhakungsmittel (19) vorgesehen sind, die zwischen dem Fahrgastraumboden (P) und dem unteren Ende (6) des ersten Arms (5) wirksam sind und die allgemeine Aufwärtsbewegung des unteren Endes (6) aus seiner Position in der Nähe des Fahrgastraumbodens (P) verhindern.

6. Sitz nach einem der vorhergehenden Ansprüche, dadurch gekennzeichnet, daß er einen ersten Arm (5) und einen zweiten Arm (16) für jede Seite des Sitzes aufweist.

7. Sitz nach Anspruch 1, dadurch gekennzeichnet, daß er wenigstens eine Führung (11) zur Abstützung des vorderen Endbereichs des Sitzes (1) aufweist, die einen im wesentlichen horizontalen Verlauf hat und die Bewegungsbahn des vorderen Endbereichs des Sitzes (1) bestimmt.

8. Sitz nach Anspruch 7, dadurch gekennzeichnet, daß der wenigstens einen Führung Gelenkteile (12) zugeordnet sind, die ihre Ausrichtung um eine horizontale Achse ermöglichen.

9. Sitz nach Anspruch 2 und Anspruch 7 oder 8, dadurch gekennzeichnet, daß die wenigstens eine Führung (11) an der tragenden Konstruktion (T) montiert ist.

10. Sitz nach einem der Ansprüche 1 bis 6, dadurch gekennzeichnet, daß wenigstens ein schwenkbarer dritter Arm (13) zur Abstützung des vorderen Bereichs des Sitzes (1) auf dem Fahrgastraumboden (P) vorgesehen ist.

11. Sitz nach einem der Ansprüche 1 bis 6, dadurch gekennzeichnet, daß der erste Arm (5) eine ihm zugeordnete Einstellvorrichtung (9) zur wahlweisen Änderung des Winkels des ersten Arms (5) gegenüber dem Sitz (1) trägt.

12. Sitz nach Anspruch 10, dadurch gekennzeichnet, daß der dritte Arm eine ihm zugeordnete Einstellvorrichtung (29) zur wahlweisen Änderung des Winkels des dritten Arms (13) relativ zu dem Sitz (1) trägt, während der erste Arm (5) mit dem Sitz (1) verbunden ist und relativ zu diesem frei verschwenkbar ist.

**Revendications**

1. Siège de véhicule comprenant au moins un premier bras (5) destiné à donner appui à la région arrière du siège (1) sur le plancher de l'habitacle (P), le premier bras pouvant pivoter autour de son extrémité inférieure (6) qui est maintenue dans une position proche du plancher de l'habitacle (figure 1, figure 2) pour permettre au siège (1) de se déplacer dans une direction avant-arrière relativement à l'habitacle, caractérisé en ce qu'il comprend au moins un deuxième bras (16) qui est articulé sur l'extrémité inférieure (6) du premier bras (5) et qui peut pivoter à son tour autour d'un centre de rotation respectif (17) situé dans une position généralement plus élevée que la position proche du plancher de l'habitacle, pour permettre un mouvement généralement ascendant de l'extrémité inférieure (6,7) du premier bras (5), à partir de la position proche du plancher de l'habitacle (P), avec basculement consécutif du siège (1) vers l'avant.

2. Siège selon la revendication 1, qui peut être monté sur le plancher de l'habitacle (P) à proximité d'une structure résistante (T) qui s'élève sur le plancher (P), caractérisé en ce que le centre respectif de rotation (17) du deuxième bras est situé sur la structure résistante (T).

3. Siège selon la revendication 1 ou la revendication 2, caractérisé en ce que le centre respectif de rotation est situé en avant de la position proche du plancher de l'habitacle (P).

4. Siège selon une quelconque des revendications 1 à 3, caractérisé en ce que le premier bras (5) s'étend le long d'une courbe dont la concavité regarde vers la partie arrière de l'habitacle.

5. Siège selon une quelconque des revendications précédentes, caractérisé en ce qu'il comprend des moyens du type crochet (19) qui agissent entre le plancher de l'habitacle (P) et l'extrémité inférieure (6) du premier bras (5) pour empêcher l'extrémité inférieure (6) de décrire un mouvement général ascendant à partir de sa position proche du plancher de l'habitacle (P).

6. Siège selon une quelconque des revendications précédentes, caractérisé en ce qu'il comprend un premier bras (5) et un deuxième bras (16) pour chaque côté du siège.

7. Siège selon la revendication 1, caractérisé en ce qu'il comprend, pour supporter l'extrémité avant du siège (1), au moins une glissière (11) qui a un développement généralement horizontal et qui définit la trajectoire de l'extrémité avant du siège (1).

8. Siège selon la revendication 7, caractérisé en ce que la glissière ou chaque glissière porte des moyens d'articulation (12) correspondants qui lui permettent de s'orienter autour d'un axe horizontal.

9. Siège selon la revendication 2 et l'une quelconque des revendications 7 et 8, caractérisé en ce que la glissière ou chaque glissière (11) est montée sur la structure résistante (T).

10. Siège selon une quelconque des revendications précédentes 1 à 6, caractérisé en ce qu'il comprend au moins un troisième bras pivotant (13) destiné à donner appui à la région avant du siège (1) sur le plancher de l'habitacle (P).

11. Siège selon une quelconque des revendications 1 à 6, caractérisé en ce que le premier bras (5) porte un dispositif de réglage correspondant (9) qui permet de faire varier sélectivement l'angle du premier bras (5) par rapport au siège (1).

12. Siège selon la revendication 10, caractérisé en ce que le troisième bras porte un dispositif de réglage correspondant (29) servant à faire varier sélectivement l'angle du troisième bras (13) par rapport au siège (1) tandis que le premier bras (5) est relié au siège (1) et peut pivoter librement par rapport à celui-ci.

FIG. 1

FIG. 2

FIG. 3

FIG. 4